# EUROPEAN PATENT APPLICATION

(11) **EP 1 669 870 A2**
(43) Date of publication of application: **14.06.2006**
(21) Application number: 05110089.9
(22) Date of filing: 27.10.2005
(51) Int. Cl.: G06F 11/14

(54) **A method and a computer system for synchronising backups of objects and of meta data about the objects**

(30) Priority: 10.12.2004 EP 04106478
(71) Applicant: International Business Machines Corporation, Armonk, NY 10504 (US)
(72) Inventor: Maier, Albert Dr., 72072 Tuebingen-Kilchberg (DE)
(74) Representative: Klein, Hans-Jörg

(57) **Abstract**

The invention relates to a method for synchronizing a backup of objects stored in a data management system with a backup of meta data about the objects kept and maintained by a second system, wherein in a backup preparing step, for each file the second system is using for maintaining the meta data a corresponding data link value pointing to the associated file is inserted in an administration table, then the objects are backed up together with the administration table, and in a backup finishing step, the data link values are removed.

## Description

The invention relates generally to a data management system and an external second system, and particularly to efficiently managing backup of objects stored in the data management system and of meta data about the objects stored in the second system. The invention refers particularly to a computer system and a method for synchronizing a backup of objects and corresponding meta data that are managed by different systems.

The invention further refers to an appropriate computer program and a computer program product.

A data management system is a type of computerized record-keeping system that stores data according to a predetermined schema, such as a so-called relational data management system. The well-known relational data management system stores information as a collection of tables having interrelated columns and rows. A relational data management system provides a user interface to store and retrieve the data, and provides a query methodology that permits table operations to be performed on the data. One such relational data management system is the so-called structured query language (SQL) interface. In general, a data management system performs well at managing data in terms of data record (table) definition, organisation, and access control. A data management system performs well at data management because a data management system associates its data records with meta data that includes information about the storage location of a record, the configuration of data in the record, and the content of the record.

As part of its data management function, a data management system performs many automatic backup and copying operation on its tables and records to ensure data integrity and recover ability. Currently, data management systems are purely suited to the management of large data objects. To operate on large objects stored in a database, the data management system needs to export the object to a file system or other management system. The object is then modified and reimported to the database.

Data management systems are facing in today's use the challenge to integrate new data types like images, audio clips, text documents, molecule structures or radiographs. Typically, a search on such kind of data is performed by highly specialised search engines that for performance reasons use highly specialised indexes. Those engines might easily be confronted with data in the terabyte range.

Many data management systems support extensibility interfaces that allow external search engines to work with data stored in the data management system and to hook into the system's query language. Relational data management systems for example offer user defined functions that allow to integrate the search capabilities of external search engines into SQL and they offer a trigger concept that allows external engines to synchronise their index in case objects are added, updated or deleted from the data management system. Typically, a search engine stores its indexes in a file system, i.e. outside of the data management system. Thus, these indexes are not in procedures.

If a backup is not synchronised, bad consequences can result. The missing synchronisation of a backup of a data management system's objects with the contents of externally stored meta data about the objects, like for example external indexes for objects stored in the data management system, can have severe consequences in case of failures. If for example a media crash occurred on the data management system media, the corresponding application would have to rebuild the external meta data in order to get a fully resynchronised system after the recovery of the data management system. If the data management system contains millions of objects, which is a typical case in such scenarios, it would take very long time to get an overall system fully operational again.

Today, there are a couple of approaches to tackle this backup recovery issue. One is to stop the systems involved, to take a backup and then to restart. This is not tolerable for most applications scenarios. Some data management systems are suggesting to simply not store anything outside the database, e.g. to store indexes used by external search engines either as large objects in the database system or to map them to index structures known to the database system and adapt the search algorism accordingly. Both approaches do have very significant performance and concurrency drawbacks compared to using the search engine native indexing structures and algorism.

To overcome limitations and problems within the prior art described above, and to overcome other limitations that will become apparent upon reading and understanding the present specification, the present invention proposes a method with the features of claim 1, a computer system with the features of claim 9, a computer program product with the features of claim 13 and a computer program with the features of claim 14.

According to the present invention, a method for synchronising a backup of objects stored in a data management system with a backup of meta data about the objects kept and maintained by a second system, is proposed, wherein in a backup preparing step for each file the second system is using for maintaining the meta data a corresponding data link value pointing to the associated file is inserted in an administration table, then the objects are backed up together with the administration table and the associated files and in a backup finishing step the data link values are removed.

Generally, there are systems for interfacing data management systems with external systems, such as computer systems with other external systems. The data link data type is one of the basic building blocks for extending the types of data that can be stored in a relational data management system. Generally, a data link system use the data link data type to link or externally reference system data from within a database. This permits computer systems to support an interface between data management systems and external systems, so that file references are accessible for example through a SQL interface of a data management system and applications may access such data through an external system interface. The idea of a data link is that actual data stored in a column is only a pointer to a corresponding object. This object can be anything, an image file, a voice recording, a text file, and the like. This means that a row in a table can be used to contain information about the object in traditional data types, and the object itself can be referenced using the data link data type. This is a typical usage of data links.

According to the present invention data links are used in a different way, actually vice versa. The object itself is in the data management system, the meta data about the object is kept and maintained by the external second system. Data link support allows users to designate directories in a root file system to contain data link objects. The data link designations provide referential integrity of the linked files that are stored in the native file system. Once a directory is marked as a data link designation, access to all objects in that directory subtree is through a so-called data link file manager (DLFM). When the objects in the data link designations are marked as data link objects, any attempt to access, remove, or renamed these objects will be intercepted. According to the present invention the data management system stores at backup time not only the data link value itself, but also the file it points to, namely the associated file.

Given such a concept of data links, the method of the present invention is based on surrounding the backup procedure by a preparing and a finishing step. In the preparing backup step for each file the second system is using for maintaining the meta data a corresponding data value is inserted into an administration table. This table will be backed up together with the object tables. In a backup finishing step, the data link values will be removed again.

In a possible embodiment of the present invention restoring the objects and the administration table consisting of the data link values pointing to the file used by the second system is preceded by the restoring preparing step, checking and if necessary stopping working of the second system during the storing and succeeded by the restoring finishing step, deleting all data link values and if necessary restarting working of the second system.

It is possible that the data management system is chosen as a relational data management system.

In a further embodiment of the present invention the object, the administration table and thus also the associated files are backed up by a standard online backup.

Furthermore, it is possible that the second system is chosen as a search engine maintaining indexes for the objects stored in the data management system.

When restoring the objects, in the already mentioned restoring preparing step it is checked whether the search engine is running and it is stopped if necessary. The mentioned restoring finishing step restarts the search engine if it was running at restoring preparing time.

The method according to the present invention can be designed to allow an owner of the second system to integrate the backup of indexes into the backup of the corresponding objects without needing any support from the data management system other then that it provides such a concept of data links. As the method according to the present invention does not impose any changes to existing backup/restore commands of the data management system, the preparing and finishing steps could be offered to applications as additional steps before/after performing backup or restore.

It is possible that the preparing and finishing steps are provided by the external second system and have to be called by an application as separate commands.

Alternatively, it is possible that the data management system provides an API (Application Programming Interface) to the external second system that allows the external second system to integrate such preparing and finishing steps into the data management system's backup and restore commands.

In a further possible embodiment of the present invention, the data management system offers an integrated solution where such preparing and finishing steps for the external second system are hard coded into backup and restore commands.

Furthermore, it is possible, that the data management system offers some other means allowing the external second system to specify information needed for the preparing and finishing steps, for example via parameters for user defined indexes.

In the following, the method according to the present invention is further described by means of an exemplary prototype that integrates a backup of indexes for an image search engine and a text search engine with a backup procedure of a data management system. This prototype offers separate preparing and finishing commands and can be implemented on top of the data management system and the mentioned search engine. No modifications within any of these systems are requested. In the following, the steps catched above are described in more detail. Only the text search engine integration will be discussed, the processing for an image search engine is absolutely identical.

An update of a text search engine index is typically done asynchronously and in bulks. This procedure is typical for search engines operating on multimedia data. Information about which text documents are edited/updated/deleted is maintained by triggers firing in an index maintained table residing in the data management system. The contents of this table are used for an index update periodically. Thus, the backup preparing step first checks whether an update is running and if there is one it waits for completion of this bulk update, but blocks future index updates. Then, for each file, the search engine used to store and maintain the external index a corresponding data link value is inserted into the so-called backup administration table. By creating data links these files, namely the index files are effectively brought under control of the data management system and nobody, even not the text search engine itself, would be able to update any of these files afterwards without getting an update access token for these files from the data management system first.

In a next step a standard online backup can be done, including the administration table consisting of the data link values pointing to the external index files. Thus, these files are automatically part of the backup procedure. During backup, the data management system is still able to accept arbitrary search queries on text documents and even insert, update, delete commands. Standard triggers for index maintenance take care of not losing any update.

In the mentioned backup finishing step the entire data link values are deleted, thus allowing the search engine again write access to its index files. Index update commands are also allowed again. In addition, the backup finishing step performs housekeeping on the index maintenance table.

A further kind of command, called reset backup, is possible. This command allows index update commands again and is intended for cases where either the data management system backup command fails for some reason or the user decides not to run the data management system backup after already finishing the backup preparing step.

The restoring of the objects and the meta data about the objects comprises also the restoring preparing step and the restoring finishing step. The restoring preparing step checks whether the text search engine is running and stops the text search engine if it is running. Then a standard data management system restore procedure restores the data link values as well as the files they are pointing to. In a restoring finishing step all the data link values are deleted and the text search engine is restarted if it is was running at restoring preparing time.

The present invention further refers to a computer system comprising a data management system with objects stored therein, said data management system supporting backup and recovery, a system unit allowing to reference external data and to get those data under control of said data management system without moving the data themselves, and a second system external to the data management system storing and maintaining meta data about the objects stored in the data management system. Within the computer system for synchronising a backup of the objects with the backup of the meta data for each file the second system is using for maintaining the meta data a corresponding data link value pointing to the associated file can be inserted by the system unit in an administration table, then the objects can be backed up together with the administration table and the data link values can afterwards be removed.

In a possible embodiment of the computer system the data management system is a relational data management system. Such a relational data management system is based upon an existence of data relations that may be illustrated as tables. Such tables can include a plurality of columns mapped across a plurality of rows. The columns essentially define respective fields in the table rows. In relational data management systems, rows are also referred to as "tuples". Table columns are also referred to as "attributes". Columns may be defined over "data types".

In a further embodiment of the computer system the second system is a search engine maintaining indexes for the objects stored in the data management system. Furthermore, it is possible, that the data management system comprises an appropriate means allowing the second system to specify information needed for backup preparing and backup finishing steps.

Furthermore, the invention covers a computer program product according to claim 13 and a computer program with the features of claim 14.

Further features and embodiments of the invention will become apparent from the description and accompanying drawings.

It will be understood that the features mentioned above and those described hereinafter can be used not only in the combination specified but also in other combinations or on their own, without departing from the scope of the present invention.

For purposes of clarity, the present discussion refers to a relational data management system and to an external search engine. However, the method and the computer system of the present invention may operate with a wide variety of types of network devices including networks and communication systems dramatically different from the specific examples illustrated in the following drawings.

It should be understood that while the invention is described in terms of a specific computer system, that the invention has applications in a variety of communication systems, such as advanced cable-television systems, advanced telephone networks or any other communication system that would benefit from the computer system or method according to the present invention. It is intended that the computer system as used in the specification and claims be reached to cover any communication system unless the context requires otherwise.

The invention is schematically illustrated in the drawings by way of example and is hereinafter explained in detail with reference to the drawings.

In the drawings,
- Figure 1: is a schematic diagram of a data management system according to the prior art;
- Figure 2: is a schematic diagram of an embodiment of a computer system according to the invention;
- Figure 3: is a flowchart illustrating an embodiment of a method according to the invention.

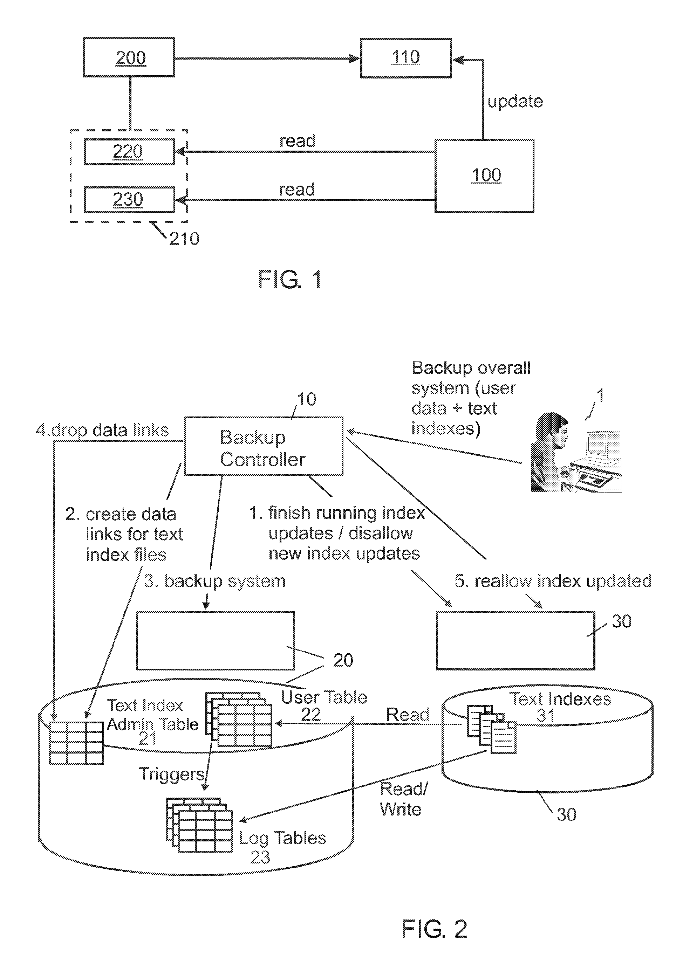

Figure 1 shows a traditional data management system according to the prior art. Figure 1 shows a search engine 100 and a data management system 200 with a database 210. Basically, the search engine 100 is suitable to search text documents held in a column of a database table 220 which is part of the database 210. The text documents must be uniquely identifiable. Therefore, the search engine 100 uses a so-called primary key of the database table 220. A primary key is a unique marker for a tuple within the database table. In case of a tuple containing information about an employee, the primary key could be a personnel number. In case of insurances, the primary key could be the corresponding insurance policy number. The text documents can be in various forms, such as HTML or XML. Rather than sequentially searching through the text documents that would take considerable amount of time, the search engine 100 creates a so-called text index 110 in order to make text documents searchable. A text index 110 consists of significant terms extracted from the text documents. A text index creation is a process of defining and declaring properties of an index, such as the location of an index. After creation, the text index contains no data. An index update is a process of adding data to the text index. The first index update adds all text documents from a text column of the database table 220 to the index. It is known as a so-called initial update. After a text index has been created it is possible to search with help of this text index.

By using a text index 110 for searching, there are synchronization issues between the database table 220 and the text index 110 that must be taken into account, as any follow-up changes to the database table 220, such as additions, deletions, and updates to the text documents must be reflected in the text index 110. Synchronisation is based on triggers that automatically store information about new, change and deleted text documents in a so-called log table 230 which is also part of the data management system 200. There is one log table 230 for each text index 110. Applying the contents of the log table 230 to its corresponding text index 110 is called incremental update. The text index 110 can be updated using a manual or an automatic option. The automatic option uses an update schedule to set days and times. It has to be noticed that neither of these options synchronizes the text index 110 within the scope of a transaction that updates, deletes, and inserts text documents. A text index 110 has certain properties, such as index file location and automatic update properties.

The following steps are used to back up enabled databases 210 and text indexes 110 which are created by the search engine 100: In a first step it has to be found out which text indexes 110 have been created by the search engine 100 and where these text indexes 110 are stored. Then it has to be ensured that no index update is running and then all services of the search engine 100 have to be stopped. After backing up the database 210, the index directories and subdirectories have to be backed up. Afterwards the services of the search engine 100 can be restarted.

When restoring an enabled database 210 and text indexes 110 created by the search engine 100 the following steps have to be used: First of all the search engine 100 has to be stopped, then the backup copies of the index directory have to be restored to the same path as before and then the search engine 100 can be restarted.

This described method has the disadvantage that all searching services are not available during backup time and the backup of the text indexes 110 is not synchronized with the backup of the database 210. Therefore, a consistent system state cannot be guaranteed after a recovery.

Figure 2 shows a schematic diagram of an embodiment of a computer system according to the invention. All components involved in a synchronized backup of the overall system, i.e. a synchronized backup of user data and text indexes, are shown. A user request from a user 1 is issued against a backup controller component 10. In figure 2, this component is shown as a separate component, independent of a data management system 20 and a search engine 30. However, generally for the invention it doesn't matter whether it is independent or not, one could also implement it as a part of one of the other systems involved. Text indexes are stored and maintained as files 31 by the search engine 30. The backup controller 10 checks in step 1 whether any text index updates are currently running on the search engine 30. It prevents new text index updates, but waits until the current text index updates finished. After that it inserts in step 2 data links into a text index administration table 21, one data link per physical file 31 used for one of the text indexes. As a further step 3 it issues a regular backup call to backup the data management system 20 comprising all user tables 22, all log tables 23 and the text administration table 21. Additionally, all files 31 a data link within the text administration table 21 points to are automatically part of this backup. In a subsequent step, the data links are deleted again and finally in step 5 processing of new text index update requests is allowed again.

Depending of the characteristics of the systems involved, small variations might be possible. It might for example be unnecessary to explicitly disallow and re-allow text index updates. Depending on the access rights attached to the data links the search engine 30 might be disallowed to update text index files anyway. The data links are introduced for the backup time only as working with data link files would significantly impact text index update performance.

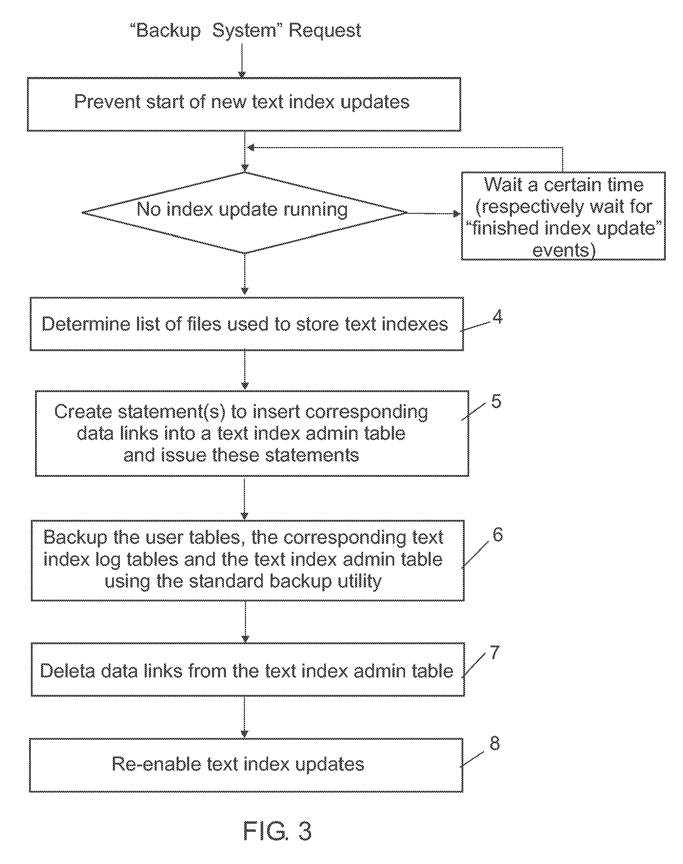

Figure 3 shows a flowchart illustrating an embodiment of a method according to the invention. When a backup of a data management system is requested any start of new text index updates is firstly prevented. If there are any text index updates running it has to be waited a certain time for that the text index updates are finished. If no text index update is running the backup procedure can be started immediately. In step 4 list of text index files used to store text indexes are determined. In step 5 one or several statements are created to insert corresponding data links into a text index administration table; each data link points to one text index file, respectively. These statements are issued. In step 6 user tables, corresponding text index log tables and the text index administration table which are all part of the data management system are backed up using a standard backup utility. In step 7 the data links are deleted from the text index administration table and in step 8 the text index updates are re-enabled.

## Claims

1. A method for synchronizing a backup of objects stored in a data management system (20) with a backup of meta data about the objects kept and maintained by a second system (30), wherein
in a backup preparing step, for each file the second system (30) is using for maintaining the meta data a corresponding data link value pointing to the associated file is inserted in an administration table (21),
then the objects are backed up together with the administration table (21), and
in a backup finishing step, the data link values are removed.

2. The method according to claim 1, wherein restoring the objects and the administration table consisting of the data link values pointing to the files used by the second system (30) is preceded by a restoring preparing step, checking and if necessary stopping working of the second system (30) during restoring and succeeded by a restoring finishing step, deleting all data link values and if necessary restarting working of the second system (30).

3. The method according to claim 1 or 2, wherein the data management system (20) is chosen as a relational data management system.

4. The method according to any one of the claims 1 to 3, wherein the objects and the administration table (21) are backed up by a standard online backup.

5. The method according to any one of the claims 1 to 4, wherein the second system (30) is chosen as a search engine maintaining indexes (31) for the objects stored in the data management system (20).

6. The method according to any one of the claims 1 to 5, wherein the backup preparing and the backup finishing step are provided by the second system (30) and have to be called by an application as separate commands.

7. The method according to any one of the claims 1 to 5, wherein the data management system (20) provides an API to the second system (30) allowing the second system (30) to integrate the backup preparing and the backup finishing step into appropriate data management system's backup commands.

8. The method according to any one of the claims 1 to 5, wherein the data management system (20) offers an appropriate means allowing the second system (30) to specify information needed for the backup preparing and backup finishing steps.

9. A computer system comprising:
a data management system (20) with objects stored therein, said data management system (20) supporting backup and recovery,
a system unit (10) allowing to reference external data and to get those data under control of the data management system without moving the data themselves,
a second system (30) external to the data management system (20) storing and maintaining meta data about the objects stored in the data management system (20), wherein for synchronizing a backup of the objects with a backup of the meta data
for each file the second system (30) is using for maintaining the meta data a corresponding data link value pointing to the associated file can be inserted in an administration table (21),
then the objects can be backed up together with the administration table (21), and
the data link values can afterwards be removed.

10. The computer system according to claim 9, wherein the data management system (20) is a relational data management system.

11. The computer system according to claim 9 or 10, wherein the second system (30) is a search engine maintaining indexes for the objects stored in the data management system (20).

12. The computer system according to any one of the claims 9 to 11, wherein the data management system (20) comprises an appropriate means allowing the second system (30) to specify information needed for backup preparing and backup finishing steps.

13. The computer program product with a computer-readable medium and a computer program stored on the computer-readable medium with a program code which is suitable for carrying out a method according to any one of claims 1 to 8 when the computer program is run on a computer.

14. A computer program with a program code which is suitable for carrying out a method according to any one of claims 1 to 8 when the computer program is run on a computer.

15. A computer-readable medium with a computer program stored thereon, the computer program comprising a program code which is suitable for carrying out a method according to any one of claims 1 to 8 when the computer program is run on a computer.
